# EUROPEAN PATENT APPLICATION

(11) **EP 1 830 549 A1**
(43) Date of publication of application: **05.09.2007**
(21) Application number: 07003492.1
(22) Date of filing: 20.02.2007
(51) Int. Cl.: H04M 7/00

(54) **Method, apparatus and system for call forwarding through internet**

(30) Priority: 01.03.2006 CN 200610057831
(71) Applicant: Myson Century, Inc., Science-based Industrial Park Hsinchu 300 (TW)
(72) Inventor: Yang, Tsen Shau, Hsinchu 300 (TW); Wang, Yun Che, Hsinchu 300 (TW); Chen, Andy In Dee, Hsinchu 300 (TW); Chiang, Shu Wei, Hsinchu 300 (TW)
(74) Representative: Liesegang, Eva

(57) **Abstract**

A method, an apparatus and a system for call forwarding through the Internet such that an incoming call transmitted by a caller can be forwarded to communication apparatuses connected to the Internet. The system comprises a first communication apparatus connected to an originating end of the caller, at least one second communication apparatus connected to the Internet, and a gateway apparatus. The gateway apparatus comprises a first port connected to the Internet, and a second port connected to the caller and the first communication apparatus. When the first communication apparatus receives an incoming call message, the gateway apparatus transmits the incoming call message to the second communication apparatus through the Internet, and then connects the call between the caller and the user of the second communication apparatus.

## Description

### BACKGROUND OF THE INVENTION

### (A) Field of the Invention

The present invention is related to a method, apparatus and system for call forwarding, and more specifically to a method, apparatus and system for call forwarding through the Internet.

### (B) Description of the Related Art

A traditional telephone exchange system utilizes the Public Switched Telephone Network (PSTN), which transmits telephone voice via analog signal. The PSTN is the basis of most countries' telephone infrastructure.

A Private Auto Branch eXchange (PABX or PBX) system is widely used in extensions of homes, offices, and business. The PBX also transmits the telephone voice via analog signal.

Internet Telephone is implemented based on voice over Internet protocol (VoIP), which transmits telephone voice packets through the Internet. Home and business users can set up Internet Telephone by installing a network environment and VoIP apparatus. The cost of Internet Telephone is cheaper than that of PSTN or PBX.

As telephone call forwarding and internal telephone dialing are still through the PSTN system instead of the Internet, users are required to pay service fees. The service fee for internal telephone is usually expensive. Thus, service fees add cost to telephone use.

Although VoIP offers newer technology and lower communication cost, both PSTN and PBX technologies remain popular. Therefore, Internet telephone, satellite telephone, cable television telephone still cannot replace traditional PSTN or PBX telephone. Hence, the user should not abandon traditional PSTN or PBX telephone completely due to newer technologies.

### SUMMARY OF THE INVENTION

The objective of the present invention is to provide a method, apparatus and system for call forwarding through the Internet such that an incoming call from a caller can be forwarded to a communication apparatus connected to the Internet. Following this, even if a user receiving a call is not present at the calling destination, the user can still communicate with the caller through the Internet by carrying an adequate communication apparatus because the call can be forwarded to the communication apparatus carried by the user. This prevents the user from missing any calls.

Another objective of the present invention is to provide a method, apparatus and system for call forwarding through the Internet such that call forwarding fees can be reduced because of free charge or low charge of the Internet.

The call forwarding system of the present invention comprises a first communication apparatus, at least one second communication apparatus and a gateway apparatus. The first communication apparatus is connected to an originating end, e.g., a PSTN phone, of the caller. The caller phones to the first communication apparatus through PSTN, PBX, satellite, cable television or Internet. The second communication apparatus is connected to the Internet. The second communication apparatus comprises any communication apparatuses which are connectible to the Internet, such as a desktop computer, a notebook computer, a mobile phone or a Personal Digital Assistant (PDA). The gateway apparatus comprises at least two ports, wherein one port is connected to the first communication apparatus. Another port is connected to the Internet.

The gateway apparatus detects an incoming call message and transform the message into an incoming call packet, then transmits the incoming call packet to the second communication apparatus in the form of instant message service (IMS) or instant calling service (ICS) through the Internet. Subsequently, a pop-up of the incoming call message is shown on the second communication apparatus.

In case of plural second communication apparatuses, as a user of one of the second communication apparatuses picks up the incoming call, the gateway apparatus connects the call between the caller and the user. Pop-ups of the incoming call message shown on the other second communication apparatuses will be stopped. Users of other second communication apparatuses can join the call while the call is still being connected between the user and the caller.

According to the present invention, the incoming call transmitted by the caller can be forwarded to communication apparatuses connected to the Internet. Moreover, if a user of the first communication apparatus is in a different country other than that of the first communication apparatus, the user can save significant internal call forwarding fees and pay only for call forwarding fees.

### BRIEF DESCRIPTION OF THE DRAWINGS

FIG. 1 illustrates a structure diagram of a system for call forwarding through the Internet in accordance with one embodiment of the present invention; and
FIG. 2 illustrates a flow chart of the method of the present invention.

### DETAILED DESCRIPTION OF THE INVENTION

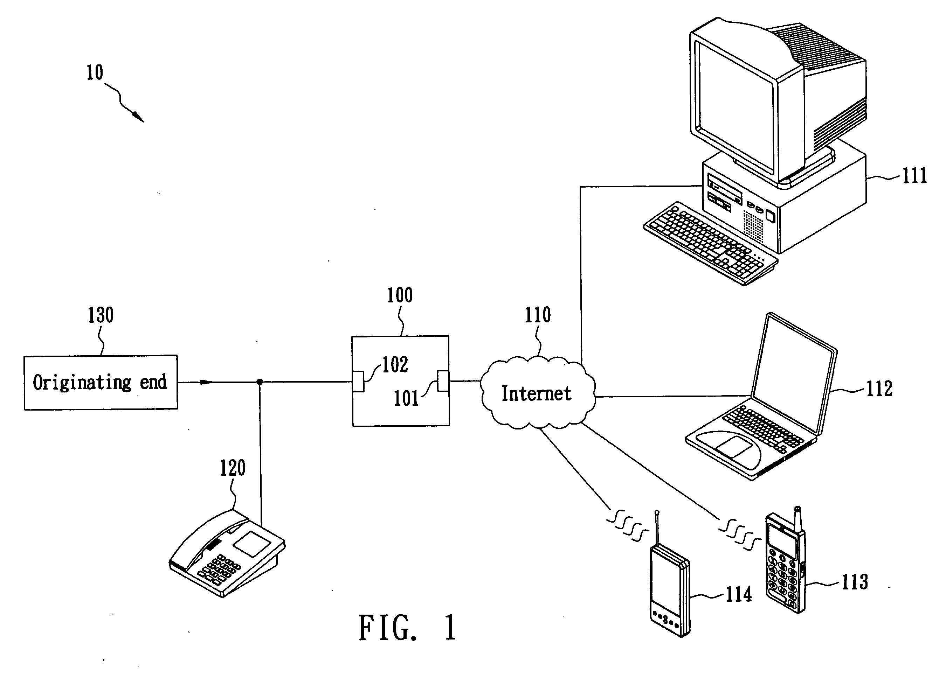

FIG. 1 shows a structure diagram of a system for call forwarding through the Internet in accordance with one embodiment of the present invention. The call forwarding system 10 comprises an originating end 130 of a caller, a telephone machine 120, a gateway apparatus 100, the Internet 110, a desktop computer 111, a notebook computer 112, a mobile phone 113 and a Personal Digital Assistant (PDA) 114. The telephone machine 120 and the gateway apparatus 100 connect in parallel, so the incoming call message of a call from the originating end 130 can be received by the telephone machine 120 and the gateway apparatus 100.

The gateway apparatus 100 comprises at least ports 101 and 102, wherein the port 101 is connected to communication apparatuses with Internet communication ability, for example, the desktop computer 111, the notebook computer 112, the mobile phone 113 or the Personal Digital Assistant (PDA) 114. In this embodiment, the desktop computer 111 and the notebook computer 112 communicate by wire, whereas the mobile phone 113 and PDA 114 communicate by wireless means. Alternatively, notebook computers that can communicate by wireless means also can be used in the embodiment. The desktop computer 111, notebook computer 112, mobile phone 113 and PDA 114 are all installed with Internet telecommunication software to telephone or transmit messages through the Internet, such as Skype and Yahoo Messenger.

The port 102 on the gateway apparatus 100 is connected to the originating end 130 and the telephone machine 120. The caller at the originating end 130 can phone to telephone machine 120 and the gateway apparatus 100 through the Public Switched Telephone Network (PSTN), Private Auto Branch exchange (PBX), satellite, cable television or Internet.

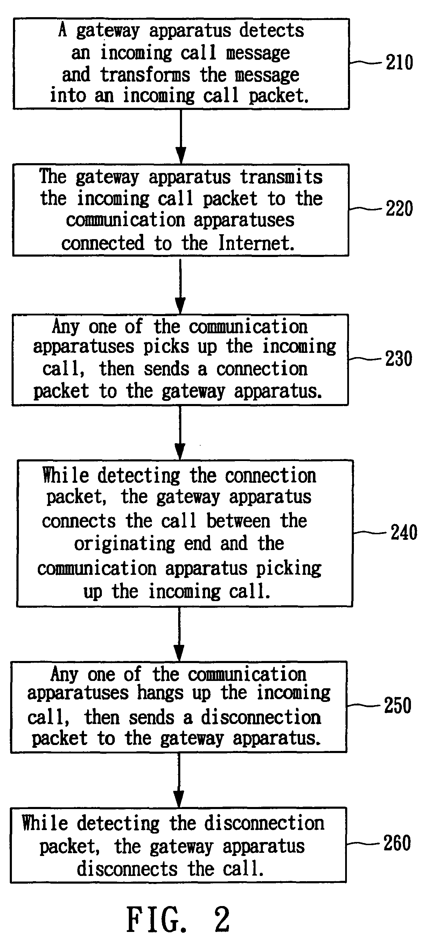

FIG. 2 illustrates a flow chart of the method of the present invention. While the caller at the originating end 130 phones to the telephone machine 120, the telephone machine 120 and the gateway apparatus 100 receive an incoming call message of the call from the originating end 130 simultaneously. The gateway apparatus 100 detects the incoming call message and transforms the incoming call message (for example, ring voice) into an incoming call packet (step 210). Then the gateway apparatus 100 transmits the incoming call packet to the desktop computer 111, notebook computer 112, mobile phone 113 or PDA 114 in the form of instant message service (IMS) or instant calling service (ICS) through the Internet (step 220). Subsequently, pop-ups of the incoming call message are shown on the desktop computer 111, notebook computer 112, mobile phone 113 or PDA 114.

When any one of the users of the desktop computer 111, notebook computer 112, mobile phone 113 and PDA 114 picks up the incoming call, a connection packet is sent to the gateway apparatus 100 (step 230). Upon detecting the connection packet, the gateway apparatus 100 connects the call between the originating end 130 and the desktop computer 111, notebook computer 112, mobile phone 113 or PDA 114 (step 240). When any one of the users of the desktop computer 111, notebook computer 112, mobile phone 113 and PDA 114 hangs up the incoming call, a disconnection packet is sent to the gateway apparatus 100 (step 250). Upon detecting the disconnection packet, the gateway apparatus 100 disconnects the call between the originating end 130 and the desktop computer 111, notebook computer 112, mobile phone 113 or PDA 114 (step 260).

In other words, the communication between the caller of the originating end 130 and the user of the communication apparatus which is one of desktop computer 111, notebook computer 112, mobile phone 113 and PDA 114 is implemented based on the VoIP, which transmits digital voice packet through the Internet.

Meanwhile, once any one of the users of the communication apparatuses 111, 112, 113 and 114 picks up the incoming call, pop-ups of the incoming call message shown on the other communication apparatuses will be stopped. Users of other communication apparatuses can join the call while the call is still being connected between the user of the communication apparatuses and the caller.

The communication apparatuses 111, 112, 113 and 114, the media of PSTN, PBX, satellite, cable television and Internet mentioned above are exemplified for illustration to the present invention. Items of communication apparatus and the media are not limited to those mentioned above.

Following this, regardless of where in the world a user is located, the user can communicate with traditional telephone exchange system through the Internet by carrying an adequate communication apparatus. Moreover, if the user is in a different country from that of the receiving end, the user can save significant internal call forwarding fees and pay only for call forwarding fees. Additionally, the user needs only to pick up the incoming call while working at a computer, instead of receiving the incoming call by a traditional telephone machine. This increases the convenience of telecommunication.

The above-described embodiments of the present invention are intended to be illustrative only. Numerous alternative embodiments may be devised by those skilled in the art without departing from the scope of the following claims.

## Claims

1. A method for call forwarding through the Internet, comprising steps of:
detecting an incoming call message of a call from a caller;
transmitting the incoming call message to at least one communication apparatus through the Internet; and
connecting the call between the caller and a user of the at least one communication apparatus.

2. The method of claim 1, wherein the caller phones through Public Switched Telephone Network (PSTN), Private Auto Branch eXchange (PBX), satellite, cable television or Internet.

3. The method of claim 1 or 2, wherein the communication apparatus is selected from the group of a desktop computer, a notebook computer, a mobile phone and a Personal Digital Assistant (PDA).

4. The method of anyone of the preceding claims, wherein the incoming call message is transmitted to the at least one communication apparatus in the form of instant message service (IMS) or instant calling service (ICS).

5. The method any of the preceding claims, wherein a pop-up of the incoming call message is shown on the at least one communication apparatus when the at least one communication apparatus receives the incoming call message.

6. The method of claim 5, wherein the number of the communication apparatuses is plural, and when the call is connected between the user of one of the communication apparatuses and the caller, the pop-ups of the incoming call message shown on other communication apparatuses are stopped.

7. The method of claim 6, wherein users of other communication apparatuses can join the call while the call is being connected between the user of one of the of the communication apparatuses and the caller.

8. The method of any of the preceding claims, wherein the caller phones to another communication apparatus so as to generate the incoming call message.

9. The method of any of the preceding claims, further comprising a step of receiving a connection packet transmitted from the at least one communication apparatus to connect the call.

10. The method of any of the preceding claims, further comprising a step of receiving a disconnection packet transmitted from the at least one communication apparatus to disconnect the call.

11. The method of any of the preceding claims, wherein the call is executed by transforming signals from the caller into packets and transmitting the packets through the Internet.

12. A gateway apparatus for call forwarding through Internet, comprising:
a first port connected to the Internet; and
a second port connected to a first communication apparatus and an originating end of a caller;
wherein the first communication apparatus receives an incoming call message of a call from the caller, transmits the incoming call message to a second communication apparatus through the Internet, and connects the call between the caller and a user of the second communication apparatus.

13. The apparatus of claim 12, wherein the caller phones through PSTN, PBX, satellite, cable television or Internet.

14. The apparatus of claim 12 or 13, wherein the call is executed by transforming signals of the caller into packets and transmitting the packets through the Internet.

15. The apparatus of any of claims 12 to 14, wherein the incoming call message is transmitted to the second communication apparatus in the form of instant message service (IMS) or instant calling service (ICS) through the Internet.

16. The apparatus of any of claims 12 to 15, wherein a connection packet transmitted from the second communication apparatus is received when the user of the second communication apparatus picks up the incoming call message, so as to connect the call between the caller and the second communication apparatus.

17. The apparatus of any of claims 12 to 16, wherein a disconnection packet is transmitted from the second communication apparatus when the user of the second communication apparatus hangs up the call, so as to disconnect the call between the caller and the second communication apparatus.

18. The apparatus of claim 12, wherein the second communication apparatus is selected from the group of a desktop computer, a notebook computer, a mobile phone and a PDA.

19. A system for call forwarding through Internet, comprising:
a first communication apparatus connected to an originating end of a caller;
at least one second communication apparatus connected to the Internet; and
a gateway apparatus according to any of claims 12 to 18.

20. The system of claim 19, wherein the second communication apparatus is selected from the group of a desktop computer, a notebook computer, a mobile phone and a PDA.

21. The system of claim 19 or 20, wherein a pop-up of the incoming call message is shown on the second communication apparatus when the second communication apparatus receives the incoming call message.

22. The system of claim 21, wherein the number of the second communication apparatuses is plural, and when the call is connected between the user of one of the second communication apparatuses and the caller, the pop-ups of the incoming call messages shown on other second communication apparatuses are stopped.

23. The system of claim 22, wherein users of other second communication apparatuses can join the call when the call is being connected between the user of one of the second communication apparatuses and the caller.
